# EUROPÄISCHE PATENTSCHRIFT

(11) **EP 3 885 523 B1**
(45) Veröffentlichungstag und Bekanntmachung des Hinweises auf die Patenterteilung: **02.09.2026**
(21) Anmeldenummer: 21163583.4
(22) Anmeldetag: 19.03.2021
(51) Int. Cl.: E06B 3/30

(54) **PROFIL FÜR EIN FENSTER- UND/ODER TÜRTEIL MIT METALLLAGE**
PROFILE FOR A WINDOW AND / OR DOOR PART WITH METAL LAYER
PROFILÉ POUR UNE PARTIE DE FENÊTRE ET/OU DE PORTE POURVU DE COUCHE MÉTALLIQUE

(30) Priorität: 27.03.2020 DE 102020108576
(43) Veröffentlichungstag der Anmeldung: 29.09.2021
(73) Patentinhaber: Salamander Industrie-Produkte GmbH, 86842 Türkheim (DE)
(72) Erfinder: Schmiedeknecht, Till, 80992 München (DE)
(74) Vertreter: Schmid, Nils T.F.

(56) Entgegenhaltungen:
- DE-A1- 102014 108 671
- DE-U1- 202016 106 882
- US-A1- 2015 202 844
- US-A1- 2015 308 181
- US-A1- 2017 167 030

## Beschreibung

Die vorliegende Erfindung betrifft ein Profil, insbesondere ein Extrusionsprofil, Mono- oder Koextrusionsprofil, für ein Fenster- und/oder Türteil, insbesondere ein Fenster- und/oder Türrahmenteil oder ein Fenster- und/oder Türflügelteil, sowie ein Verfahren zum Herstellen eines derartigen Profils.

Im Stand der Technik ist es bekannt, die Attraktivität von Tür- und/oder Fensterrahmen dadurch zu erhöhen, die sichtbaren Außen- oder Innenseiten der Rahmen mit einer Kunststoff-Folie zu kaschieren, welche beispielsweise ein Holzaussehen, ein betonartiges Aussehen oder ähnliches imitieren soll.

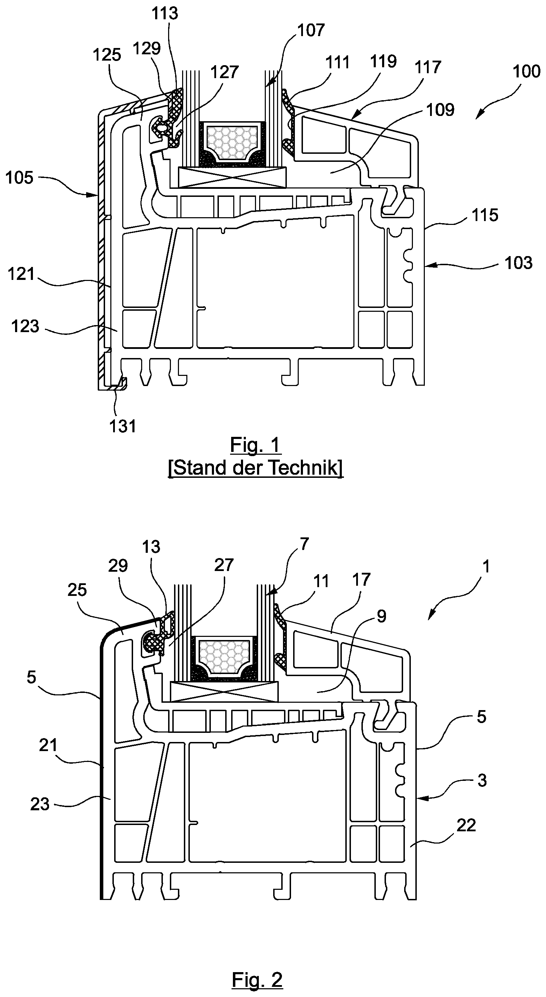

Des Weiteren existieren auf dem Markt Fenster- und Türrahmen aus PVC, auf dessen Innen- und Außenseiten eine Aluminiumrahmenblende mit einer Wandstärke von deutlich über 1 mm, insbesondere im Bereich von 1,2 mm bis 3 mm, verclipst sind, um dem Rahmen einen metallischen Look zu verleihen. Ein derartiger Rahmen ist als Figur 1 der vorliegenden Anmeldungsunterlagen beigefügt und wird später im Detail beschrieben. Grundsätzlich ist ein Vorteil des Aufclipsens der zusätzlichen Aluminiumrahmenblende die erhöhte UV-Verträglichkeit, was zu einer verlängerten Lebensdauer des Kunststoff-Rahmens führt, sowie eine Strahlungswärmeisolation.

Nachteilig an dem Aufclipsen der Aluminiumrahmenblenden ist die aufwendige Herstellung bzw. Montage. Die Aluminiumblenden müssen zugeschnitten oder befräst werden und mit zusätzlichen Abdichtungen an die Kunststoff-Rahmen montiert werden. Ferner ist eine spezielle Verglasungsdichtung notwendig, um die Dichtigkeit zwischen Kunststoff-Rahmen und Verglasung bei Verwendung einer Aluminium-rahmenblende bereitstellen zu können.

Aus US 2015/308181 A1 ist ein Hohlprofil aus Kunststoff, insbesondere für Fenster oder Türen, bekannt, bei dem zumindest ein Teil einer Außenfläche des Hohlprofils mit einer Metallfolie beschichtet ist.

Aus DE 20 2016 106 882 U1 ist ebenfalls ein Profil für eine Fenster oder eine Tür bekannt, das an einer Außenseite eine Metallfolie aufweist.

Es ist Aufgabe der vorliegenden Erfindung, die Nachteile des Standes der Technik zu überwinden, insbesondere die Herstellung von individualisierten Profilen für Fenster- und/oder Türrahmenteile oder Fenster- und/oder Türflügelteile zu vereinfachen.

Die Aufgabe wird durch die Gegenstände der unabhängigen Ansprüche 1 und 9 gelöst.

Danach ist ein Profil für ein Fenster- und/oder Türteil, beispielsweise ein Tür- und/oder Fensterrahmenteil oder ein Tür- und/oder Fensterflügelteil, vorgesehen. Bei dem Profil kann es sich beispielsweise um ein insbesondere aus Kunststoff, wie PVC, hergestelltes Profil, insbesondere ein Extrusionsprofil, beispielsweise ein Monoextrusionsprofil oder ein Ko-Extrusionsprofil, handeln. Gattungsgemäße Profile können beispielsweise durch Strangziehen oder im Extrusionsverfahren hergestellt werden. Im Rahmen der vorliegenden Erfindung sind die Begriffe Extrusionsprofil, Monoextrusionsprofil bzw. Koextrusionsprofil so zu verstehen, dass das entsprechende Profil durch Extrusion, Monoextrusion bzw. Koextrusion hergestellt ist.

Beim Extrusionsverfahren kann es sich um eine Monoextrusion oder eine Koextrusion handeln. Das erfindungsgemäße Profil kann beispielsweise wenigstens abschnittsweise ein Tür- und/oder Fensterteil bilden, wie beispielsweise einen Holm, wie einen Vertikalholm oder einen Horizontalholm, entweder eines feststehenden Tür- und/oder Fensterrahmenteils oder eines bewegbaren, insbesondere verschiebbaren und/oder verschwenkbaren, Tür- und/oder Fensterflügelteils. Für den Fall, dass das Profil als Kunststoff-Extrusionsprofil ausgebildet ist, umfasst das Profil zunächst ein durch Extrusion hergestelltes Extrusionshalbzeug, das entlang der Extrusionsrichtung einen im Wesentlichen identischen Querschnitt sowie eine im Wesentlichen identische Außenabmessung besitzt.

Das erfindungsgemäße Profil umfasst eine mittels eines Klebstoffs zumindest teilweise auf eine Außenseite des Profils, insbesondere auf einen eine Außenseite des Profils bildenden Profilsteg, aufkaschierte Metalllage, insbesondere eine Metallfolie. Die Metalllage umfasst Kupfer. Die Metalllage besitzt eine Dicke, insbesondere Materialdicke, von weniger als 1,0 mm, insbesondere eine Dicke im Bereich von 0,05 mm bis 0,5 mm. Unter Kaschieren wird im Allgemeinen das Verbinden mehrerer Lagen mit Hilfe eines Kaschiermittels, das gemäß der vorliegenden Erfindung wenigstens einen Klebstoff umfasst, verstanden. Das Aufkaschieren der dünnen Metalllage hat sich als besonders vorteilhaft im Hinblick auf die Herstellung erwiesen, da zum einen die dünnen, flexiblen Metalllagen auf einfache und platzsparende Weise bevorratet werden können, beispielsweise durch Aufwickeln auf eine Bevorratungsrolle, und zum anderen sich der Kaschierprozess überraschenderweise selbst für Metalllagen gut eignet. Bezüglich Kupfer haben sich beispielsweise die folgenden Kennzahlen bzw. Parameter als gut geeignet erwiesen: Flächengewicht von mindestens 100 g/m² und/oder von höchstens 170 g/m²; Zugfestigkeit von mindestens 11 kg/mm², insbesondere von mindestens 25 kg/mm²; eine Dehnbarkeit von wenigstens 2 %, insbesondere von wenigstens 3 %; eine Rauheit R_{z} auf der Klebeseite von wenigstens 5 µm und/oder Rₐ von weniger als 0,43 µm; und/oder eine Kratzfestigkeit von mindestens 1,1 kg/cm.

Des Weiteren wurde herausgefunden, dass bei der Auswahl der erfindungsgemäßen dünnen Metalllagen sich diese besonders formanpassend und formgetreu an selbst unregelmäßige Profilaußenseiten anschmiegen und aufkaschieren lassen, sodass eine gleichmäßige, langfristig haltbare und passgenaue Kaschierung der entsprechenden Profilaußenseite gewährleistet werden kann. Ein weiterer Vorteil besteht darin, dass die Metalllage in Bezug auf die zu kaschierende Fläche der Außenseite des Profils nicht exakt bemessen sein muss, sondern durchaus größer bemessen sein darf, da diese oft mittels einfacher Nachbearbeitungsschritte, wie ein Besäumen, abgetrennt werden kann. Das Aufkaschieren der Metalllage im Gegensatz zum nachträglichen Aufstecken hat ferner den herstellungstechnischen Vorteil dahingehend, dass der Kaschierprozess unmittelbar in den Extrusionsprozess integriert werden kann.

In einer beispielhaften Weiterbildung des erfindungsgemäßen Profils ist eine mit dem Profil zu verbindende Verbindungsfläche der Metalllage zumindest teilweise mit einem Haftvermittler beschichtet. Ein Haftvermittler, auch Haftgrund benannt, ist im Allgemeinen eine Substanz, die im Verbindungsbereich zwischen Metalllage und Profil, die durchaus auf unterschiedlichen Grundmaterialien basieren können, eine enge physikalische und/oder chemische Bindung verstärken kann.

In der vorliegenden Erfindung umfasst die Metalllage Kupfer, insbesondere besteht die Metalllage aus Kupfer. Eine Außenfläche der Kupfer-Metalllage, die einer mit dem Profil zu verbindenden Verbindungsfläche gegenüberliegt, besteht wenigstens teilweise aus ED-Kupfer und/oder ist wenigstens teilweise durch Galvanisierung mit Kupfer beschichtet. ED-Kupfer ist eine Abkürzung für "Electric Deposit" und bezeichnet eine Kupferkaschierung, die durch ein galvanisches Verfahren, insbesondere Galvanisierung, auf eine zu kaschierende Fläche, hier die Metalllage, die beispielsweise Kupfer umfassen oder aus Kupfer bestehen kann, aufgebracht wurde. Die Verbindungsfläche weist eine Rauheit Rz im Bereich von 5 µm bis 20 µm auf. Als Rauheit eignet sich die sogenannte gemittelte Rautiefe Rz (auch Zehnpunkthöhe) genannt. Es wurde herausgefunden, dass die Verwendung von ED-Kupfer-Metalllagen, insbesondere Kupferfolien, oder bei der Galvanisierung einer Metalllage mit einer Kupferschicht die entsprechende Außenfläche ohne weiteren Einsatz von Haftverstärkern, wie Primern, Haftvermittlern und/oder Lacken, direkt mit dem auf der Metalllage aufgetragenen Klebstoff mit dem Profil verklebt werden kann. Das ED-Kupfer bzw. die durch Galvanisierung erzeugte Kupferschicht bildet aufgrund seiner Oberflächenstruktur eine Haftfläche mit guter Adhäsion zum Klebstoff bzgl. der erfindungsgemäßen Profile, insbesondere aus Kunststoff.

Das ED-Kupfer kann beispielsweise in einem 2-stufigen Prozess hergestellt werden: Abscheiden des Basiskupfers ("Plating Prozess"); und Aufbringen einer Haftschicht ("Treatment Prozess"). Mittels des 2-stufigen Prozesses erfolgt eine optimale Vergrößerung der realen Oberfläche, sodass eine besonders vorteilhafte mechanische Verankerung mit dem Klebstoff für eine besonders widerstandsfähige Haftung erfolgen kann. Im Rahmen der galvanischen Abscheidung im ersten Prozessschritt, die beispielsweise mittels in eine schwefelsaure Kupferlösung eingetauchte zylindrische Trommeln erfolgen kann, erlangt die Kupferlage eine glatte Seite/Oberfläche und eine matte, mikroraue Seite/Oberfläche, die sogenannte Wachstumsseite. Die raue Oberfläche wird anschließend in einem zweiten elektrochemischen Prozessschritt mit einer Treatmentschicht zur Verbesserung der Haftung versehen. Die Treatmentschicht kann durch ein mehrstufiges, abwechselndes aufbauendes und verfestigendes Abscheiden von metallischem Kupfer erzeugt werden. Dadurch entstehen dentritische und sphärische Strukturelemente auf der Oberfläche, die die effektive Oberfläche vergrößern und somit eine optimale Verankerung des Klebstoffs ermöglichten. Dendrite sind in der Metallographie baum- oder strauchartige Kristallstrukturen.

In einer weiteren beispielhaften und nicht erfindungsgemäßen Ausführung ist die Metalllage aus Aluminium gebildet. Eine der Verbindungsfläche der Aluminium-Metalllage gegenüberliegende Außenfläche der Aluminium-Metalllage kann zumindest teilweise mit einem Haftvermittler beschichtet sein. Beispielsweise handelt es sich um denselben Haftvermittler, der auf die Verbindungsfläche aufgebracht ist. Dabei kann eine Schichtdicke des auf die der Verbindungsfläche gegenüberliegenden Außenfläche aufgebrachten Haftvermittlers im Bereich von 2 g/qm² bis 20 g/qm², insbesondere im Bereich von 4 g/qm² bis 15 g/qm², liegen. In einer beispielhaften Weiterbildung kann auf die außenseitige Haftvermittlerschicht eine Lackschicht aufgebracht werden, beispielsweise ein Polyesterlack, ein Epoxidharzlack, ein Acryllack und/oder ein PU-Lack, beispielsweise mit einer Auftragsmenge im Bereich von 4 g/qm² bis 8 g/qm². Es hat sicher überraschenderweise herausgestellt, dass die außenseitige Beschichtung an der der Verbindungsfläche der Aluminium-Metalllage gegenüberliegenden Außenseite, der Aluminium-Metalllage eine erhöhte Widerstandsfähigkeit gegenüber äußeren Einflüssen, beispielsweise eine erhöhte Kratzfestigkeit sowie einen erhöhten Widerstand gegen Druckbeaufschlagung von Außen, verleiht. Ein Lack ist im Allgemeinen ein flüssiger oder auch pulverförmiger Beschichtungsstoff, der auf die Verbindungsfläche aufgetragen, beispielsweise aufgesprüht, aufgewalzt oder dergleichen ist, und einen in der Regel durchgehenden festen Film aus der Oberfläche ausbildet.

Die Aluminiumlage, insbesondere die Aluminiumfolie, kann eloxiert sein. Bevorzugt weist die Aluminiumlage eine nicht-verdichtete Eloxalschicht, die auch als anodische Oxidschicht bezeichnet werden kann, auf. Entgegen der üblichen Praxis, Eloxalschichten zu verdichten, kann es für die Zwecke der vorliegenden Erfindung vorteilhaft sein, dass nachträgliche Verdichten wegzulassen, sodass die Eloxalschicht frei von einer nachträglichen Verdichtung ist. Dadurch werden die Poren der Eloxalschicht nicht geschlossen und bilden einen guten Verankerungsgrund für den Klebstoff.

Gemäß einem weiteren Aspekt der vorliegenden Erfindung, der mit den vorhergehenden Aspekten und beispielhaften Ausführungen kombinierbar ist, ist ein Profil für ein Tür- und/oder Fensterteil, insbesondere ein Tür- und/oder Fensterrahmenteil oder ein Tür - und/oder Fensterflügelteil, bereitgestellt. Bei dem Profil kann es sich beispielsweise um ein insbesondere aus Kunststoff, wie PVC, hergestelltes Profil, insbesondere ein Extrusionsprofil, beispielsweise ein Monoextrusionsprofil oder ein Ko-Extrusionsprofil, handeln. Gattungsgemäße Profile können beispielsweise durch Strangziehen oder im Extrusionsverfahren hergestellt werden. Das erfindungsgemäße Profil kann beispielsweise wenigstens abschnittsweise ein Tür- und/oder Fensterrahmenteil bilden, wie beispielsweise einen Holm, wie einen Vertikalholm oder einen Horizontalholm, entweder eines feststehenden Tür- und/oder Fensterrahmenteils oder eines bewegbaren, insbesondere verschiebbaren und/oder verschwenkbaren, Tür- und/oder Fensterflügelteils. Für den Fall, dass das Profil als Kunststoff-Extrusionsprofil ausgebildet ist, umfasst das Profil zunächst ein durch Extrusion hergestelltes Extrusionshalbzeug, das entlang der Extrusionsrichtung einen im Wesentlichen identischen Querschnitt sowie eine im Wesentlichen identische Außenabmessung besitzt.

Das erfindungsgemäße Profil umfasst eine mittels eines Klebstoffs zumindest teilweise auf eine Außenseite des Profils aufkaschierte flexible, insbesondere dünne, Metalllage, insbesondere Metallfolie. Die Metalllage umfasst Kupfer.

Beispielweise ist eine mit dem Profil zu verbindende Verbindungsfläche der Metalllage zumindest teilweise mit einem Haftvermittler beschichtet.

Als Haftvermittler wird vorliegend eine Substanz verstanden, in die im Verbindungsbereich zwischen Metalllage und Profil, das beispielsweise aus Kunststoff und/oder mittels Extrusion hergestellt ist, eine physikalische oder chemische enge Bindung herstellt bzw. verstärkt. Die flexible Metalllage ist zu einem gewissen Maße elastisch dehnbar beziehungsweise biegbar, insbesondere derart, dass sie auf einfache Weise auch an nicht ebene Profilflächen aufgebracht und diesbezüglich formangepasst werden kann. Eine Metalllage kann gemäß der vorliegenden Erfindung dann als flexibel verstanden werden, wenn diese insbesondere zur Bevorratung auf eine Rolle aufgewickelt beziehungsweise aufgerollt werden kann.

In einer beispielhaften Weiterbildung der vorliegenden Erfindung umfasst der Haftvermittler in einem Lösungsmittel wie VOC, Isobutanol, Xylole oder Ethylbenzol gelöste Ein- oder Zweikomponenten-Harze, insbesondere Epoxidharze, Alkydharze, Acrylharze und/oder Polyesterharze. Der so zusammengesetzte Haftvermittler hat sich besonders bevorzugt in Bezug auf die Kaschierung von Metalllagen erwiesen, insbesondere beim Kaschieren von Metalllagen auf Kunststoff-Profile, wie Kunststoff-Extrusionsprofile.

Gemäß einer weiteren beispielhaften Ausführung des erfindungsgemäßen Profils ist der Haftvermittler durch eine auf die Metalllage aufgeklebte, insbesondere mittels eines Klebstoffs vorzugsweise auf Acrylat-Basis, oder einer heißlaminierten Kunststofffolie realisiert. Der Klebstoff kann beispielsweise PUR umfassen. Unter Lamination wird im Allgemeinen ein stoffschlüssiges thermisches Fügeverfahren verstanden, bei dem vorzugsweise keine weitere Hilfsmaterialien eingesetzt werden, wobei bei Heißlaminieren Temperaturen im Bereich von 60°C bis 80°C eingesetzt werden können. Die heißlaminierte Kunststofffolie kann beispielsweise eine Dicke im Bereich von 0,01 mm bis 0,08 mm, insbesondere im Bereich von 0,02 mm bis 0,06 mm, besitzen und/oder aus PET, PA, PVC, PC oder PI hergestellt sein.

Gemäß einer weiteren beispielhaften Ausführung des erfindungsgemäßen Profils ist der Haftvermittler durch eine selbstklebende Schicht aus Acrylatkleber realisiert.

Gemäß einer beispielhaften Weiterbildung der vorliegenden Erfindung beträgt eine Schichtdicke des Haftvermittlers 2 g/qm² bis 20 g/qm², insbesondere 4 g/qm² bis 15 g/qm². Es wurde gemäß der vorliegenden Erfindung herausgefunden, dass bereits derartige geringe Mengen an Haftvermittler eine zuverlässige Aufkaschierung der Metalllage auf das beispielsweise aus Kunststoff bestehende Profil ermöglichen.

In einer weiteren beispielhaften Ausführung der vorliegenden Erfindung ist zwischen dem Klebstoff und dem Haftvermittler ein Lack eingebracht. Bei dem Lack kann es sich beispielsweise um einen Polyesterlack, Epoxidharzlack, Acryllack und/oder PU-Lack handeln. Eine Auftragsmenge des Lacks kann beispielsweise im Bereich von 4 g/m² bis 8 g/m² liegen.

In einer weiteren beispielhaften Ausführung der vorliegenden Erfindung ist der Klebstoff ein insbesondere einkomponentiger Schmelzklebstoff, insbesondere auf PU-Basis. Des Weiteren kann eine Schichtdicke größer als 60 g/mm² betragen. Die Schichtdicke kann ferner im Bereich von 80 g/qm² bis 100/qm² liegen. Bei dem Klebstoff kann es sich beispielsweise um einen sogenannten PU-Hotmelt handeln. Derartige Schmelzklebstoffe, auch Heißklebstoffe, Heißkleber oder Heißleim genannt, sind in der Regel lösungsmittel- bzw. wasserfreie und bei Raumtemperatur in der Regel feste Klebstofftypen, die bei Erhitzung als viskose Flüssigkeit vorliegen und somit zuverlässig auf eine zu verklebende Klebefläche aufgetragen werden können und beim Abkühlen unter reversibler Verfestigung eine feste Verbindung zwischen den Klebepartnern herstellen. Diese Klebstoffarten umfassen in der Regel thermoplastische Polymere.

Beim Aufkaschieren von dünnen, flexiblen Metalllagen auf Profile für Tür- und/oder Fensterteile, die beispielsweise aus Kunststoff und/oder mittels Extrusion hergestellt sind, haben die Erfinder der vorliegenden Erfindung ein Problem beim Verkleben insofern identifiziert, als unbehandelte, Roh-Metalllagen eine zu kleine Oberflächenspannung besitzen und somit der Adhäsionsaufbau zum verwendeten Klebstoff unzureichend für die Verwendung bei Tür- und/oder Fensterteilen ist, besonders wenn diese im Gebäude so angeordnet sind, dass die Metalllage zur Umgebung gewandt ist und somit äußeren Umwelteinflüssen ausgesetzt ist. Des Weiteren wurde herausgefunden, dass bestimmte Metalle, beispielsweise Aluminium, eine Art Dampfsperre bilden, die ein Ausdampfen des Klebers verhindern, was sich bei Verwendung von lösemittelbasierten Klebesystemen durch die damit verbundene Behinderung der Ablüftung beziehungsweise des Verdunstens des Lösungsmittels des Klebstoffs nachteilig auf die Haftung auswirkt. Des Weiteren besteht grundsätzlich ein Interessenskonflikt zwischen einerseits dem Wunsch, besonders dünne Metalllagen aufzukaschieren, da diese besonders einfach zu handhaben sind, wenig Platz benötigen und flexibel und einfach formanzupassend auf durchaus auch unregelmäßige Profilflächen aufzukaschieren sind, und andererseits einer gewissen Mindestdicke der Metalllage im Hinblick auf Stabilitäts- und Widerstandsfähigkeit gegenüber äußeren Einflüssen, wie beispielsweise Abdrücken oder Dellen und/oder äußeren Einflüssen. Durch die erfindungsgemäßen Maßnahmen, nämlich die definierte Dicke der Metalllage im Bereich von weniger als 0,1 mm und insbesondere von wenigstens 0,05 mm, sowie alternativ oder zusätzlich der Einsatz eines geeigneten Haftvermittlers gegebenenfalls unter zusätzlicher Aufbringung einer Lackschicht, beispielsweise ein Polyesterlack, Epoxidharzlack, Akryllack und/oder PU-Lack, beispielsweise mit einer Auftragsmenge im Bereich von 4 g/m² bis 8 g/m², im Verbindungsflächenbereich zwischen Profil und Metalllage, kann dieser Interessenskonflikt auf wirtschaftliche Weise zuverlässig gelöst werden.

Gemäß einem weiteren Aspekt der vorliegenden Erfindung, der mit den vorhergehenden Aspekten und beispielhaften Ausführung kombinierbar ist, ist ein Verfahren zum Herstellen eines nach einem der vorstehenden Ansprüche ausgebildeten Extrusionsprofils für ein Tür- und/oder Fensterteil, insbesondere ein vorzugsweise feststehendes Tür- und/oder Fensterrahmenteil oder ein vorzugsweise bewegbares Tür- und/oder Fensterflügelteil, bereitgesellt. Das Verfahren kann dazu ausgebildet sein, ein Profil gemäß einem der beispielhaften Ausführungen bzw. Aspekte der vorliegenden Erfindung herzustellen.

Bei dem erfindungsgemäßen Verfahren wird mittels Extrusion, insbesondere mittels Ko-Extrusion, ein Extrusionshalbzeug, beispielsweise aus Kunststoff, wie PVC, hergestellt. Des Weiteren wird bei dem erfindungsgemäßen Verfahren mittels eines Klebstoffs, wie eines einkomponentigen Schmelzklebstoffs, insbesondere auf PU-Basis und/oder mit einer Schichtdicke von wenigstens 60 g/qm², insbesondere im Bereich von 80 g/qm² bis 100 g/qm², zumindest teilweise auf eine Außenseite des Extrusionshalbzeugs eine Metalllage, insbesondere eine Metallfolie, von weniger als 1,0 mm Dicke, insbesondere mit einer Dicke im Bereich von 0,05 mm bis 0,5 mm, aufkaschiert.

Gemäß der Erfindung ist die Kupferlage, insbesondere die Kupferfolie, aus ED-Kupfer hergestellt. Die diesbezüglichen obigen Ausführungen sind auf das erfindungsgemäße Verfahren übertragbar. Beispielsweise kann das ED-Kupfer In einem 2-stufigen Prozess hergestellt werden: Abscheiden des Basiskupfers ("Plating Prozess"); und Aufbringen einer Haftschicht ("Treatment Prozess"). Mittels des 2-stufigen Prozesses erfolgt eine optimale Vergrößerung der realen Oberfläche, sodass eine besonders vorteilhafte mechanische Verankerung mit dem Klebstoff für eine besonders widerstandsfähige Haftung erfolgen kann.

Wird eine Aluminiumlage, insbesondere eine Aluminiumfolie, verwendet, kann diese, wie es oben beschrieben wurde, eloxiert sein, wobei beispielsweise die normalerweise übliche Verdichtung ausbleiben kann, sodass ein besonders guter Haftgrund gebildet ist.

Gemäß einer beispielhaften Weiterbildung des erfindungsgemäßen Verfahrens wird eine mit dem Extrusionshalbzeug zu verbindende Verbindungsfläche der Metalllage vor dem Aufkaschieren zumindest teilweise mit einem Haftvermittler beschichtet. Der Haftvermittler kann beispielsweise entsprechend einem der zuvor genannten Aspekte beziehungsweise entsprechend einer der beschriebenen beispielhaften Ausführungen ausgebildet sein.

In einer weiteren beispielhaften des erfindungsgemäßen Verfahrens wird die Metalllage vor dem Beschichten mit dem Klebstoff auf eine Temperatur von mehr als 60°C, insbesondere auf eine Temperatur im Bereich von 70°C bis 180°C, vorgewärmt. Die Erfinder der vorliegenden Erfindung haben herausgefunden, dass durch die im Vergleich zu Stand der Technik-Kaschierungsprozessen beispielsweise von Kunststofffolien erhöhte Vorwärm- und/oder Kaschiertemperatur eine bessere Haftung der Metalllage auf dem Profil, insbesondere Kunststoff-Extrusionsprofil, erreicht wird.

Gemäß einer beispielhaften Weiterbildung des erfindungsgemäßen Verfahrens wird die Metalllage mittels einer Kaschierwalze auf das Extrusionshalbzeug aufgebracht. Dabei kann beim Kaschieren, insbesondere beim Aufpressen und/oder Aufrollen der Kaschierwalze auf das Extrusionshalbzeug, der Metalllage die Metalllagentemperatur bei mehr als 50°C gehalten werden. Auch diesbezüglich hat sich eine im Vergleich zu Stand der Technik-Kunststofffolien-Kaschierungen erhöhte Temperatur als besser geeignet bezüglich der Haftwirkung der Metalllage auf dem Extrusionshalbzeug herausgestellt.

Gemäß einem weiteren Aspekt der vorliegenden Erfindung, der mit den vorhergehenden Aspekten und beispielhaften Ausführungen kombinierbar ist, ist ein Verfahren zum Herstellen eines insbesondere erfindungsgemäßen Extrusionsprofils für ein Tür- und/oder Fensterteil, insbesondere ein vorzugsweise feststehendes Tür- und/oder Fensterrahmenteil oder ein vorzugsweise bewegbares Tür- und/oder Fensterflügelteil, bereitgestellt. Das Verfahren kann dazu ausgelegt sein, ein erfindungsgemäßes Profil herzustellen. Bei dem erfindungsgemäßen Verfahren wird ein Extrusionshalbzeug mittels Extrusion, insbesondere mittels Ko-Extrusion, beispielsweise aus Kunststoff hergestellt. Des Weiteren wird mittels eines Klebstoffs, beispielsweise eines insbesondere einkomponentigen Schmelzklebstoffs, insbesondere auf PU-Basis, beispielsweise bei einer Schichtdicke des Klebstoffs von wenigstens 60 g/qm², insbesondere im Bereich von 80 g/qm² bis 100 g/qm² zumindest teilweise auf eine Außenseite des Extrusionshalbzeugs eine flexible Metalllage, insbesondere Metallfolie aufkaschiert. Erfindungsgemäß ist eine mit dem Extrusionshalbzeug zu verbindende Verbindungsfläche der Metalllage vor dem Aufkaschieren zumindest teilweise mit einem Haftvermittler beschichtet. Der Haftvermittler kann beispielsweise gemäß einem der zuvor beschriebenen Aspekte bzw. beispielhaften Ausführungen ausgebildet sein und/oder eine Schichtdicke im Bereich von 2 g/qm², insbesondere im Bereich von 4 g/qm² bis 15/qm², besitzen.

Gemäß einem weiteren Aspekt der vorliegenden Erfindung, der mit den vorhergehenden Aspekten und beispielhaften kombinierbar ist, ist ein Tür- und/oder Fensterteil, insbesondere ein feststehendes Tür- und/oder Fensterrahmenteil oder ein bewegliches, insbesondere verschwenkbares und/oder verschiebares, Tür- und/oder Fensterflügelteil bereitgesellt. Das Tür- und/oder Fensterteil umfasst ein erfindungsgemäßes Profil oder ist durch ein erfindungsgemäßes Herstellungsverfahren hergestellt. Beispielsweise können zwei zueinander senkrecht stehende und/oder aneinander befestigte, insbesondere aneinander geschweißte, wie eckverschweißte, Tür- und/oder Fensterrahmenteile oder Tür- und/oder Fensterflügelteile ein sogenanntes Tür- und/oder Fenstereckteil bilden.

Die vorliegende Erfindung stellt auch einen Tür- und/oder Fensterrahmen sowie einen Tür- und/oder Fensterflügel bereit, die wenigstens einen Holm aufweisen, der durch ein erfindungsgemäßes Verfahren hergestellt ist oder durch ein erfindungsgemäßes Profil gebildet ist.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine Querschnittsansicht eines PVC-Extrusionsprofils mit aufgesteckter Aluminiumblende gemäß Stand der Technik;
- Figur 2: eine bespielhafte Ausführung eines erfindungsgemäßen Profils in der Schnittansicht;
- Figur 3: eine schematische Darstellung einer weiteren beispielhaften Ausführung eines Verbindungsbereichs eines erfindungsgemäßen Profils;
- Figur 4: eine schematische Darstellung einer weiteren beispielhaften Ausführung eines Verbindungsbereichs eines erfindungsgemäßen Profils;
- Figur 5: eine schematische Darstellung eines Ausschnitts einer Herstellungsanlage für ein erfindungsgemäßes Profils;
- Figur 6: eine schematische Darstellung einer Oberfläche einer Kupferlage eines erfindungsgemäßen Profils.

In Figur 1 ist ein Kunststoff-Extrusionsprofil, das im Allgemeinen mit der Bezugsziffer 100 versehen ist, in Schnittansicht dargestellt, auf das eine Aluminiumblende 105 an einer dem Gebäudeinnenraum abgewandten Außenseite aufgesteckt ist, um zum einen dem Kunststoff-Extrusionsprofil eine Aluminiumoptik zu verleihen und andererseits das Kunststoff-Extrusionsprofil mittels der Aluminiumblende vor Witterungseinflüssen zu schützen. Eine Verglasung 107 ist in eine Aufnahme 109 eingesetzt und mittels zwei Dichtelementen 111, 113 beidseitig der Verglasung 107 gegenüber den angrenzenden Profilteilen des Extrusionsprofils 100 abgedichtet. Das Extrusionsprofil 100 gemäß Figur 1 ist mehrteilig aufgebaut und weist neben einer Profilbasis 115 ein dem Gebäudeinneren zugewandtes Blendprofil 117 auf, welches zum einen mit der Profilbasis 115 formschlüssig verbunden ist und das eine Dichtfläche 119 besitzt, an welcher eine Dichtung 111 befestigt ist zur Abdichtung gegenüber der Verglasung 107.

Die Profilbasis 115 besitzt in der Schnittansicht eine im Wesentlichen L-förmige Außenkontur, sodass zur Außenseite hin die Profilbasis 115 mit der Verglasung 107 überlappt, wobei der Überlappungsbereich mit einer Dichtung 113, der sogenannten Verglasungsdichtung 113, belegt ist, um die Verglasung 107 beidseitig abzudichten. Eine dem Gebäudeinneren abgewandten Extrusionsprofilaußenseite 121 ist durch einen im Wesentlichen sich gradlinig erstreckenden Profilaußensteg 123 konstanter Wandstärke gebildet, welcher einstückig in einen zu dem Profilaußensteg 21 geneigt angeordneten Dichtsteg 125 übergeht, der sich in Richtung Verglasung 107 zur Begrenzung eines abzudichtenden Dichtungsspalts 127 erstreckt.

Die Aluminiumblende 105 ist an eine Form des Profilaußenstegs 123 und des Dichtstegs 125 angepasst, sodass die Aluminiumblende 105 das extrudierte KunststoffProfil 103 zur Außenseite hin vollständig bedeckt. Im Bereich der Verglasung 107 ist der Dichtungsspalt 127 gebildet zwischen einem angewinkelten Endabschnitt 129 der Aluminiumblende 105 und der flächigen Erstreckung der Verglasung 107. In diesem Bereich ist eine speziell für das Extrusionsprofil 103 gebildete Verglasungsdichtung 113 eingesetzt. Im Vergleich zu Kunststoff-Extrusionsprofilen ohne Aluminiumblende 105 ist die Verglasungsdichtung 113 abgewandelt worden, um die sich ergebende unterschiedliche Dichtspalt-Abmessung 127 abdichten zu können.

An dem anderen Ende 131 der Aluminiumblende 105 weist die Aluminiumblende 105 einen im Querschnitt U-förmigen Endabschnitt auf, der so um ein Ende des Profilaußenstegs 123 herum angeordnet ist. Durch die angewinkelten Enden 129, 131 ist die Aluminiumblende 105 formschlüssig an dem Kunststoff-Extrusionsprofil 103 befestigt, nämlich aufgesteckt und aufgeklipst.

Unter Bezugnahme auf Figur 2 wird ein Ausführungsbeispiel eines erfindungsgemäßen Profils, das im Allgemeinen mit der Bezugsziffer 1 versehen ist, beschrieben. Zur Vermeidung von Wiederholungen werden gleiche Komponenten mit der gleichen Begrifflichkeit versehen, wobei die Bezugszeichen um 100 reduziert sind. In den beispielhaften Ausführungen erfindungsgemäßer Profile 1 der Figuren 2 bis 5 handelt es sich beispielhaft um Extrusionsprofile 1 aus Kunststoff, insbesondere PVC, die mittels Extrusion hergestellt sind. Die Extrusion kann mittels Mono- oder Ko-Extrusion erfolgen.

Im Unterschied zu der aufgesteckten und verrasteten Aluminiumblende 105 ist auf den dem Gebäudeinneren abgewandten Profilaußensteg 23 eine Metalllage 5, wie eine Metallfolie, von weniger als 0,8 mm Dicke, die entlang ihrer Längserstreckung konstant und aufgrund der dünnen Dimensionierung flexibel sein kann, aufkaschiert. Dabei ist klar, dass die Metalllage 5 auch auf einen innenseitigen, dem Profilaußensteg 23 gegenüberliegenden Profilinnensteg 22 aufkaschiert sein kann bzw., dass dieser zusätzlich mit einer Metalllage 5 kaschiert sein kann, um auch innenseitig dem Extrusionsprofil 3 eine Metalloptik zu verleihen. Auf den Herstellungsprozess wird später im Detail eingegangen. Der Vorteil des Aufkaschierens der Metalllage 5 ist insbesondere, dass zum einen die Metalllage 5 unmittelbar auf dem Extrusionsprofil 1 anliegt, sodass eine besonders kompakte Struktur gegeben ist. Des Weiteren kann die Metalllage 5 so bemessen sein, dass diese im Wesentlichen ausschließlich den sichtbaren Bereich der entsprechenden Profilstege 23, 22 des Extrusionsprofils 3 abdeckt. Es ist nicht notwendig, dass die Metalllage 5 beispielsweise im Bereich der Verglasung in den Dichtungsspalt 27 hineinragt, beispielsweise um eine Befestigung zu gewährleisten wie es bei der Aluminiumblende 105 der Fall ist. Gleiches gilt für das andere Ende des Profilaußenstegs 23, den die Metalllage 5 nicht umgreifen muss. Im Bereich der Verglasung 7 wirkt sich dies besonders vorteilhaft aus, da auf die standardmäßigen Verglasungsdichtungen 13 zurückgegriffen werden kann, sodass keine eigenen Fertigungen für die Verglasungsdichtung 113 wie bei dem Einsatz der Aluminiumblende 105 notwendig sind. Die Befestigung mittels Kaschieren ist deutlich stärker und damit langlebiger als bei der Stand der Technik-Verklipsung.

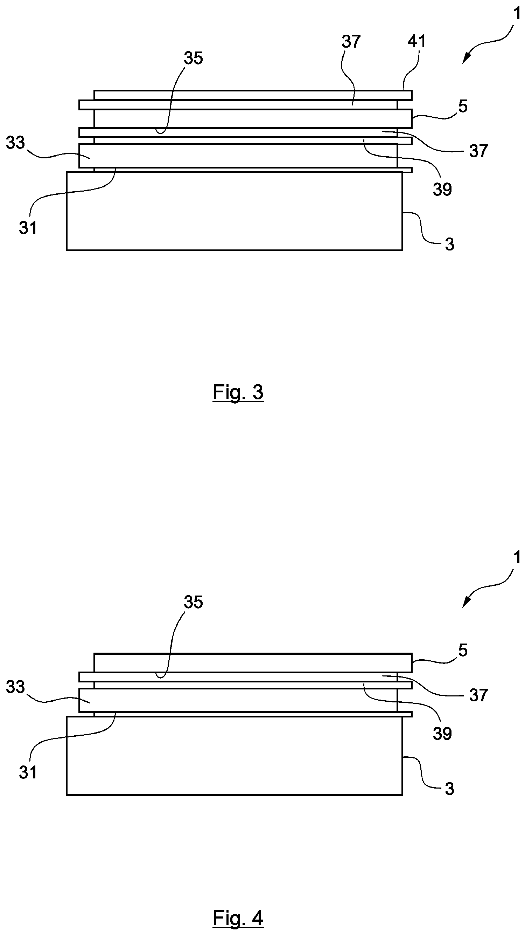

In den Figuren 3 bis 4 sind beispielhafte schematische Ausschnitte erfindungsgemäßer Extrusionsprofile 1 gezeigt, wobei der Verbindungsbereich zwischen Metalllage 5 deutlich vergrößert und schematisch abgebildet ist. Der sich jeweils ergebende Schichtaufbau wird nun jeweils beginnend von unten nach oben beschrieben. Auf das Kunststoff-Extrusionsprofil 3 wird zunächst ein sogenannter Primer 31 aufgebracht, der ein besonders gutes Anhaften des darauffolgenden Klebstoffs 33 gewährleistet. Erfindungswesentlich ist, dass die Metalllage 5 zumindest auf der dem Kunststoff-Extrusionsprofil 3 zugewandten Verbindungsfläche 35 zumindest teilweise mit einem Haftgrund 37 beschichtet ist. In Figur 3 ist zusätzlich zu sehen, dass zwischen Haftgrund 37 und der Klebstoffschicht 33 ein optionaler Lack 39, wie ein Decklack oder ein Klarlack, eingebracht sein kann. Bei einigen Metalllagen 5 hat sich herausgestellt, dass es notwendig sein kann, die Metalllage 5 beidseitig mit einem Haftgrund 37 zu beschichten. Beispielsweise kann dies bei Aluminium notwendig sein. Zusätzlich kann erneut optional ein Lack 41, wie ein Decklack oder ein Klarlack oder ein farbgebender Lack, auf die außenseitige Haftgrund-Schicht 37 aufgebracht sein.

Bei den in Figur 4 schematisch dargestellten Beispielen des erfindungsgemäßen Extrusionsprofils 1 ist als Metalllage 5 ein Metall gewählt, nämlich Kupfer,
bei dem es nicht notwendig ist auch eine außenseitige Haftgrundschicht 37 aufzubringen. Der Verbindungsbereich zwischen Kunststoff-Extrusionsprofil 3 und Metalllage 5 ist dabei analog zu Figur 3 realisiert, wobei die Lackschicht 39 auch hier optional ist.

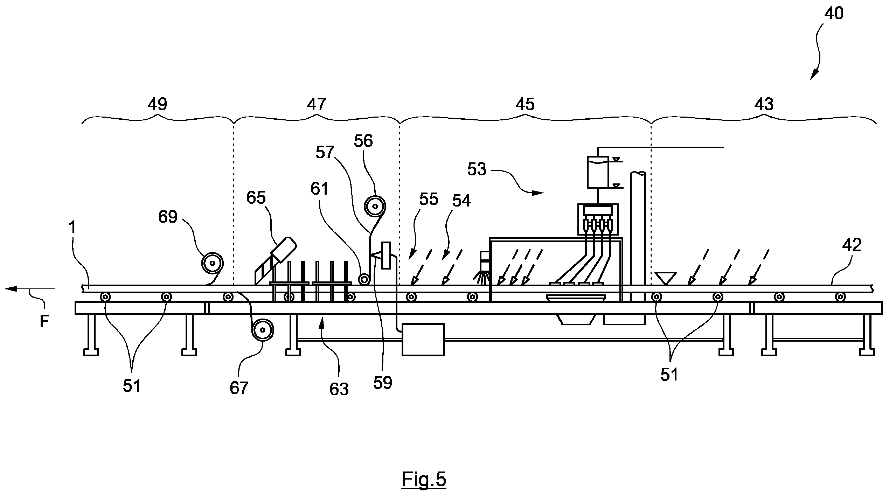

In Bezug auf Figur 5 ist der Herstellungsprozess zum Herstellen eines erfindungsgemäßen Extrusionsprofils 1 und insbesondere zum Kaschieren von Metalllagen 5 schematisch dargestellt und wird im Folgenden näher erläutert: Figur 5 zeigt einen Ausschnitt einer Fertigungsanlage 40 zum Herstellen eines erfindungsgemäßen Extrusionsprofils 1, in den ein durch ein Extrusionswerkzeug (nicht dargestellt) hergestelltes Extrusionshalbzeug 42 gefördert wird (in der Abbildung von rechts). Grundsätzlich ist die Kaschieranlage 40 in folgende Stationen unterteilt: Einlaufbereich 43, Primer Bereich 45, Umlegebereich 47 und Auslaufbereich 49. Grundsätzlich wird das Extrusionshalbzeug 42 und das später fertiggestellte Extrusionsprofil 1 durch die Kaschieranlage 40 mittels einer Vielzahl von Förderwalzen 51 in Extrusionsprofillängsrichtung entsprechend einer Förderrichtung F gefördert. In dem Einlaufbereich 43 wird das Extrusionshalbzeug 42 im Wesentlichen mit einer Profiltemperatur im Bereich von 18°C bis 25°C angeliefert. In dem Primerbereich 45 befindet sich eine Primer-Station 53 zum gleichmäßigen und vollflächigen Auftragen des Primers auf die mit der Metalllage 5 zu kaschierenden Extrusionsprofilseite, die beispielsweise eine Innen- oder eine Außenseite 22, 23 des fertigen Fensters oder der fertigen Tür sein kann. Zwischen dem Primer-Bereich 45 und dem Umlegebereich 47 ist ein Einwirk- und Trockenabschnitt 54 für den Primer vorgesehen.

In dem Umlegebereich 47 ist die aufzukaschierende Lage, insbesondere Metalllage 5, wie eine Metallfolie auf einer Walze 56 gelagert. Von der Walze 46 wird dann fortwährend im Wesentlichen synchron und/oder abgestimmt auf die Förderung F des Extrusionshalbzeugs 42 ein Strang 57 der aufzukaschierenden Metalllage 5 abgerollt und einseitig auf einer Kaschierfläche mit Klebstoff beschichtet, welcher mittels einer Düse 59 stromaufwärts einer Kaschierwalze 61, welche die Metalllage 5 auf das Kunststoff-Extrusionsprofil 3 aufdrückt, aufgebracht wird.

Im Gegensatz zur Stand der Technik-PVC-Folien-Kaschierung auf Kunststoff-Extrusionsprofile wurde erfindungsgemäß herausgefunden, dass die Klebstoffmenge deutlich erhöht werden muss und insbesondere Klebstoffmengen im Bereich von 80 g/m² notwendig sind. Des Weiteren erfolgt im Bereich der Klebstoffaufbringung eine Vorwärmung der Metalllage 5, wobei auch hier erfindungsgemäß herausgefunden wurde, dass deutlich höhere Temperaturen notwendig sind, die beispielsweise im Bereich von 90°C bis 125°C liegen. Für eine gute Anhaftung ist identifiziert worden, dass im Bereich der Kaschierwalze 61 eine Temperatur von mindestens 65°C gehalten werden muss. Optional kann an die Kaschierwalze 61 ein Heißluftgebläse oder ein anderweitiger Wärmeluftgenerator 63 anschließen.

Mittels einer Abtrenneinrichtung 65 kann eine Besäumung erfolgen. Anschließend kann insbesondere im Bereich des Profilauslaufs 49 ein weiterer Auftrag von Schutzfolien erfolgen, welche von jeweiligen Walzen 67, 69 bereitgestellt werden auf die Ober- und Unterseite 22, 23 des erfindungsgemäßen Extrusionsprofils 1 aufgebracht werden. Dies kann durch einen auf den Schutzfolien aufgebrachten Klebstoff erfolgen.

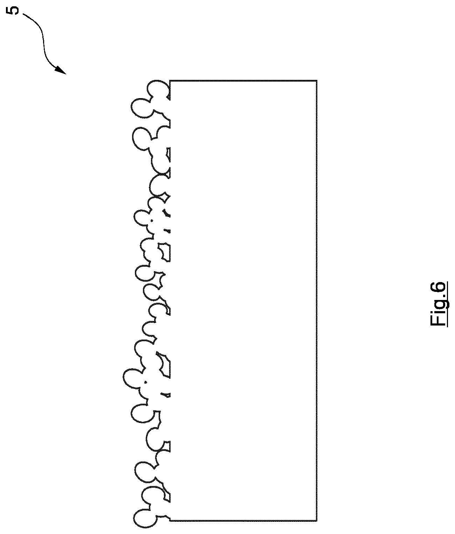

In Figur 6 ist eine schematische Prinzipskizze einer Schnittansicht durch eine Kupferfolie 5 aus ED-Kupfer abgebildet, die mit dem oben beschriebenen 2-stufigen Prozess hergestellt wurde. An der Oberseite ist die im Rahmen des zweiten Prozessschritts erzeugte "Treatmentschicht" aus dentritischen und sphärischen Strukturelementen zu erkennen. Die baum- oder strauchartigen Verästelungsstrukturen sorgen für eine vorteilhafte Vergrößerung der Oberfläche und eine optimale Verankerungsstruktur für den Klebstoff (nicht abgebildet). Beispielsweise weist die Kupferfolie 5 eine Stärke von etwa 200 µm auf.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, wobei der Schutzbereich der Erfindung nur durch die Ansprüche definiert wird.

## Patentansprüche

1. Profil (1), insbesondere Extrusionsprofil, wie Mono- oder Ko-Extrusionsprofil, für ein Tür- und/oder Fensterteil, umfassend eine mittels eines Klebstoffs (33) zumindest teilweise auf eine Außenseite des Profils (1) aufkaschierte Metalllage (5), insbesondere Metallfolie, von weniger als 1,0 mm Dicke, insbesondere mit einer Dicke im Bereich von 0,05 mm bis 0,5 mm, wobei eine mit dem Profil (1) zu verbindende Verbindungsfläche der Metalllage (5) eine Rauheit R_{z} im Bereich von 5 µm bis 20 µm besitzt, wobei die Metalllage (5) Kupfer umfasst und eine der Verbindungsfläche gegenüberliegende Außenfläche der Kupfer-Metalllage (5) wenigstens teilweise aus ED-Kupfer besteht und/oder wenigstens teilweise durch Galvanisierung mit Kupfer beschichtet ist.

2. Profil (1) nach Anspruch 1, wobei die mit dem Profil (1) zu verbindende Verbindungsfläche der Metalllage (5) zumindest teilweise mit einem Haftvermittler (37) beschichtet ist.

3. Profil (1) nach einem der vorstehenden Ansprüche, wobei die Kupfer-Metalllage (5) derart behandelt ist, dass sie dentritische und sphärische Strukturelemente insbesondere an der Verbindungsfläche aufweist.

4. Profil (1), nach einem der vorstehenden Ansprüche, wobei die Metalllage (5) eine flexible Metalllage, insbesondere Metallfolie, ist, dessen Verbindungsfläche zumindest teilweise mit einem Haftvermittler (37) beschichtet ist.

5. Profil (1) nach einem der Ansprüche 2 bis 4, wobei der Haftvermittler (37) in einem Lösungsmittel, wie VOC, Isobutanol, Xylol oder Ethylbenzol, gelöste Ein- oder Zweikomponenten-Harze, insbesondere Epoxidharze, Alkydharze, Akrylharze und/oder Polyesterharze, umfasst.

6. Profil (1) nach einem der Ansprüche 2 bis 5, wobei der Haftvermittler (37) durch eine auf die Metalllage (5) aufgeklebte, insbesondere mittels eines Klebstoffs (33) vorzugsweise auf Akrylat-Basis, oder heißlaminierte Kunststofffolie realisiert ist, wobei der Klebstoff (33) PUR umfasst, wobei insbesondere die Kunststofffolie eine Dicke im Bereich von 0,01 mm bis 0,08 mm, insbesondere von 0,02 mm bis 0,06 mm, besitzt und/oder aus PET, PA, PVC, PC oder PI hergestellt ist.

7. Profil (1) nach einem der Ansprüche 2 bis 6, wobei der Haftvermittler (37) durch eine selbstklebende Schicht aus Akrylatkleber realisiert ist und/oder eine Schichtdicke des Haftvermittlers 2 g/m² bis 20 g/m², insbesondere 4 g/m² bis 15 g/m², beträgt und/oder wobei zwischen dem Klebstoff (33) und dem Haftvermittler (37) ein Lack eingebracht ist, beispielsweise ein Polyesterlack, Epoxidharzlack, Akryllack und/oder PU-Lack, beispielsweise mit einer Auftragsmenge im Bereich von 4 g/m² bis 8 g/m².

8. Profil (1) nach einem der vorstehenden Ansprüche, wobei der Klebstoff (33) ein insbesondere einkomponentiger Schmelzklebstoff, insbesondere auf PU-Basis, ist und/oder eine Schichtdicke größer als 60 g/m² beträgt, insbesondere im Bereich von 80 g/m² bis 100 g/m² liegt.

9. Verfahren zum Herstellen eines nach einem der vorstehenden Ansprüche ausgebildeten Extrusionsprofils (1) für ein für ein Tür- und/oder Fensterteil, bei dem mittels Extrusion, insbesondere mittels Ko-Extrusion, ein Extrusionshalbzeug (3) hergestellt wird und mittels eines Klebstoffs (33) zumindest teilweise auf eine Außenseite des Extrusionshalbzeugs (3) eine Metalllage (5), insbesondere Metallfolie, von weniger als 1,0 mm Dicke aufkaschiert wird, wobei eine mit dem Extrusionshalbzeug (3) zu verbindende Verbindungsfläche der Metalllage (5) eine Rauheit R_{z} im Bereich von 5 µm bis 20 µm besitzt, wobei die Metalllage (5) Kupfer umfasst und eine der Verbindungsfläche gegenüberliegende Außenfläche der Kupfer-Metalllage (5) wenigstens teilweise aus ED-Kupfer besteht und/oder wenigstens teilweise durch Galvanisierung mit Kupfer beschichtet ist.

10. Verfahren nach Anspruch 9, bei dem die Verbindungsfläche der Metalllage (5) vor dem Aufkaschieren zumindest teilweise mit einem Haftvermittler (37) beschichtet wird.

11. Verfahren nach Anspruch 9 oder 10, bei dem die Metalllage (5) vor dem Beschichten mit dem Klebstoff (33) auf eine Temperatur von mehr als 60°C, insbesondere im Bereich von 70° C bis 180° C, vorgewärmt wird.

12. Verfahren nach einem der Ansprüche 9 bis 11, bei dem die Metalllage (5) mittels einer Kaschierwalze auf das Extrusionshalbzeug (3) aufgebracht wird, wobei beim Kaschieren, insbesondere Aufpressen und/oder Aufrollen, der Metalllage (5) die Metalllagentemperatur bei mehr als 50°C gehalten wird.

13. Verfahren nach einem der Ansprüche 9 bis 12, wobei die Metalllage (5) eine flexible Metalllage (5), insbesondere Metallfolie, ist, dessen mit dem Extrusionshalbzeug (3) zu verbindende Verbindungsfläche vor dem Aufkaschieren zumindest teilweise mit einem Haftvermittler (37) beschichtet wird.

14. Tür- und/oder Fensterteil, insbesondere Tür- und/oder Fensterrahmenteil oder Tür- und/oder Fensterflügelteil, umfassend ein nach einem der Ansprüche 1 bis 8 ausgebildetes Profil (1) oder ein durch das Verfahren gemäß einem der Ansprüche 9 bis 13 hergestelltes Profil (1).

## Claims

1. A profile (1), in particular an extrusion profile, such as a mono- or co-extrusion profile, for a door and/or window part, comprising a metal layer (5), in particular a metal foil, of less than 1.0 mm thickness, in particular with a thickness in the range from 0.05 mm to 0.5 mm, laminated at least partially onto an outer side of the profile (1) by means of an adhesive (33), wherein a connecting surface of the metal layer (5) to be connected to the profile (1) has a roughness R_{z} in the range from 5 µm to 20 µm, wherein the metal layer (5) comprises copper and an outer surface of the copper metal layer (5) opposite the connecting surface consists at least partially of ED copper and/or is at least partially coated with copper by electroplating.

2. The profile (1) according to claim 1, wherein the connecting surface of the metal layer (5) to be connected to the profile (1) is at least partially coated with a bonding agent (37).

3. The profile (1) according to one of the preceding claims, wherein the copper metal layer (5) is treated such that it has dendritic and spherical structural elements in particular on the connecting surface.

4. The profile (1) according to one of the preceding claims, wherein the metal layer (5) is a flexible metal layer, in particular a metal foil, whose connecting surface is at least partially coated with a bonding agent (37).

5. The profile (1) according to one of claims 2 to 4, wherein the bonding agent (37) comprises one- or two-component resins, in particular epoxy resins, alkyd resins, acrylic resins and/or polyester resins, dissolved in a solvent, such as VOC, isobutanol, xylene or ethylbenzene.

6. The profile (1) according to one of claims 2 to 5, wherein the bonding agent (37) is realized by a plastic film bonded onto the metal layer (5), in particular by means of an adhesive (33) preferably based on acrylate, or a hot-laminated plastic film, wherein the adhesive (33) comprises PUR, wherein in particular the plastic film has a thickness in the range from 0.01 mm to 0.08 mm, in particular from 0.02 mm to 0.06 mm, and/or is made of PET, PA, PVC, PC or PI.

7. The profile (1) according to one of claims 2 to 6, wherein the bonding agent (37) is realized by a self-adhesive layer of acrylate adhesive and/or a layer thickness of the bonding agent is 2 g/m² to 20 g/m², in particular 4 g/m² to 15 g/m², and/or wherein a varnish is introduced between the adhesive (33) and the bonding agent (37), for example a polyester varnish, epoxy resin varnish, acrylic varnish and/or PU varnish, for example with an application quantity in the range from 4 g/m² to 8 g/m².

8. The profile (1) according to one of the preceding claims, wherein the adhesive (33) is in particular a single-component hotmelt adhesive, in particular based on PU, and/or a layer thickness is greater than 60 g/m², in particular in the range from 80 g/m² to 100 g/m².

9. A method for producing an extrusion profile (1), formed according to one of the preceding claims, for a door and/or window part, in which a semi-finished extrusion product (3) is produced by means of extrusion, in particular by means of co-extrusion, and a metal layer (5), in particular a metal foil, of less than 1.0 mm thickness is laminated at least partially onto an outer side of the semi-finished extrusion product (3) by means of an adhesive (33), wherein a connecting surface of the metal layer (5) to be connected to the semi-finished extrusion product (3) has a roughness Rz in the range from 5 µm to 20 µm, wherein the metal layer (5) comprises copper and an outer surface of the copper metal layer (5) opposite the connecting surface consists at least partially of ED copper and/or is at least partially coated with copper by electroplating.

10. The method according to claim 9, wherein the connecting surface of the metal layer (5) is at least partially coated with a bonding agent (37) prior to lamination.

11. The method according to claim 9 or 10, in which the metal layer (5) is preheated to a temperature of more than 60°C, in particular in the range from 70°C to 180°C, before coating with the adhesive (33).

12. The method according to one of claims 9 to 11, in which the metal layer (5) is applied to the semi-finished extrusion product (3) by means of a laminating roll, the metal layer temperature being kept at more than 50°C during laminating, in particular pressing on and/or rolling up, of the metal layer (5).

13. The method according to one of claims 9 to 12, wherein the metal layer (5) is a flexible metal layer (5), in particular a metal foil, whose connecting surface to be connected to the semi-finished extrusion product (3) is at least partially coated with a bonding agent (37) before lamination.

14. A door and/or window part, in particular a door and/or window frame part or a door and/or window leaf part, comprising a profile (1) formed according to one of claims 1 to 8 or a profile (1) produced by the method according to one of claims 9 to 13.

## Revendications

1. Profilé (1), notamment profilé extrudé, tel que profilé monoextrudé ou coextrudé, destiné à une partie de porte et / ou de fenêtre, comprenant une couche métallique (5), notamment un film métallique contrecollé(e) à l'aide d'un agent adhésif (33) au moins partiellement sur une surface extérieure du profilé (1), d'une épaisseur de moins de 1,0 mm, notamment d'une épaisseur de l'ordre de 0,05 mm à 0,5 mm, une surface d'assemblage de la couche métallique (5) qui doit être assemblée avec le profilé (1) faisant preuve d'une rugosité R_{z} de l'ordre de 5 µm à 20 µm, la couche métallique (5) comprenant du cuivre et une surface extérieure placée au vis-à-vis de la surface d'assemblage de la couche métallique (5) en cuivre étant conçue au moins partiellement en cuivre ED et / ou étant revêtue au moins partiellement de cuivre par galvanisation.

2. Profilé (1) selon la revendication 1, la surface d'assemblage de la couche métallique (5) qui doit être assemblée avec le profilé (1) étant revêtue au moins partiellement d'un promoteur d'adhérence (37).

3. Profilé (1) selon l'une quelconque des revendications précédentes, la couche métallique (5) en cuivre étant traitée de telle sorte, qu'elle comporte notamment sur la surface d'assemblage des éléments structurels dendritiques et sphériques.

4. Profilé (1), selon l'une quelconque des revendications précédentes, la couche métallique (5) étant une couche métallique souple, notamment un film métallique, dont la surface d'assemblage est revêtue au moins partiellement d'un promoteur d'adhérence (37).

5. Profilé (1) selon l'une quelconque des revendications 2 à 4, le promoteur d'adhérence (37) comprenant dans un solvant, tels que des COV (composés organiques volatils), de l'isobutanol, du xylène ou de l'éthylbenzène, des résines monocomposant ou bicomposants dissoutes, notamment des résines époxy, des résines alkydes, des résines acryliques et/ou des résines polyester.

6. Profilé (1) selon l'une quelconque des revendications 2 à 5, le promoteur d'adhérence (37) étant réalisé par un film de matière plastique collé sur la couche métallique (5), notamment au moyen d'un agent adhésif (33), de préférence sur base d'acrylate ou laminé à chaud, l'agent adhésif (33) comprenant du PUR, notamment le film de matière plastique présentant une épaisseur de l'ordre de 0,01 mm à 0,08 mm, notamment de 0,02 mm à 0,06 mm et / ou étant fabriqué en PET, en PA, en PVC, en PC ou en PI.

7. Profilé (1) selon l'une quelconque des revendications 2 à 6, le promoteur d'adhérence (37) étant réalisé par une couche autocollante en adhésif acrylate et / ou une épaisseur de couche du promoteur d'adhérence étant de 2 g/m² à 20 g/m², notamment de 4 g/m² à 15 g/m² et / ou entre l'agent adhésif (33) et le promoteur d'adhérence (37) étant interposé un vernis, par exemple un vernis polyester, un vernis résine époxy, un vernis acrylique et / ou un vernis PU, appliqué par exemple dans une quantité de l'ordre de 4 g/m² à 8 g/m².

8. Profilé (1) selon l'une quelconque des revendications précédentes, l'agent adhésif (33) étant un agent adhésif thermofusible notamment monocomposant, notamment sur base de PU et / ou une épaisseur de couche étant supérieure à 60 g/m², se situant notamment dans l'ordre de 80 g/m² à 100 g/m².

9. Procédé, destiné à fabriquer un profilé extrudé (1), conçu notamment selon l'une quelconque des revendications précédentes pour une partie de porte et / ou de fenêtre, lors duquel par extrusion, notamment par coextrusion, l'on fabrique un produit semi-fini (3) extrudé et à l'aide d'un agent adhésif (33), l'on contrecolle au moins partiellement sur une face extérieure du produit semi-fini (3) extrudé une couche métallique (5), notamment un film métallique d'une épaisseur inférieure à 1,0 mm, une surface d'assemblage de la couche métallique (5) qui doit être assemblée avec le produit semi-fini (3) extrudé faisant preuve d'une rugosité R_{z} de l'ordre de 5 µm à 20 µm, la couche métallique (5) comprenant du cuivre et une surface extérieure placée au vis-à-vis de la surface d'assemblage de la couche métallique (5) en cuivre étant conçue au moins partiellement en cuivre ED et / ou étant revêtue au moins partiellement de cuivre par galvanisation.

10. Procédé selon la revendication 9, lors duquel, avant le contrecollage, l'on revêt la surface d'assemblage de la couche métallique (5) au moins partiellement avec un promoteur d'adhérence (37).

11. Procédé selon la revendication 9 ou 10, lors duquel, avant de la revêtir avec l'agent adhésif (33), l'on fait préchauffer la couche métallique (5) à une température supérieure à 60° C, notamment de l'ordre de 70° C à 180° C.

12. Procédé selon l'une quelconque des revendications 9 à 11, lors duquel l'on applique la couche métallique (5) sur le produit semi-fini (3) extrudé à l'aide d'un rouleau de contrecollage, notamment par pressage et / ou par application au rouleau de la couche métallique (5), la température de la couche métallique étant maintenue à plus de 50° C.

13. Procédé selon l'une quelconque des revendications 9 à 12, la couche métallique (5) étant une couche métallique (5) souple, notamment un film métallique, dont on revêt au moins partiellement avant le contrecollage la surface d'assemblage qui doit être assemblée avec le produit semi-fini (3) extrudé avec un promoteur d'adhérence (37).

14. Partie de porte et / ou de fenêtre, notamment partie de cadre de porte et / ou de fenêtre et / ou partie de vantail de porte et / ou d'ouvrant de fenêtre, comprenant un profilé (1) conçu selon l'une quelconque des revendications 1 à 8 ou un profilé (1) fabriqué d'après le procédé selon l'une quelconque des revendications 9 à 13.
